# EUROPÄISCHE PATENTSCHRIFT

(11) **EP 0 767 314 B1**
(45) Veröffentlichungstag und Bekanntmachung des Hinweises auf die Patenterteilung: **02.06.1999**
(21) Anmeldenummer: 96115743.5
(22) Anmeldetag: 01.10.1996
(51) Int. Cl.: F16B 13/06, E04F 13/08, F16B 2/14

(54) **Montagehilfsvorrichtung zur Sicherung von Bauteilen**
Mounting device for assembling elements
Dispositif d'aide au montage pour l'assemblage des éléments

(30) Priorität: 02.10.1995 DE 19536729
(43) Veröffentlichungstag der Anmeldung: 09.04.1997
(73) Patentinhaber: RW Rüdel Werner Werkzeug- und Maschinenbau, 84307 Eggenfelden (DE)
(72) Erfinder: Rüdel, Werner, 84307 Eggenfelden (DE)
(74) Vertreter: Vogeser, Werner, Dipl.-Ing.

(56) Entgegenhaltungen:
- EP-A- 0 019 782
- EP-A- 0 150 605
- DE-A- 2 352 048
- FR-A- 2 107 152

## Beschreibung

Die Erfindung betrifft eine Montagehilfsvorrichtung für Bauteile wie Türzargen o. dgl. in Türlaibungen o. dgl. mit zwei Teilen, die an ihren einander zugekehrten Flächen keilflächenartig ausgestaltet und mittels eines verschiebbaren Betätigungsstückes auseinanderspreizbar sind (FR 2 107 152 A).

Die Erfindung betrifft auch eine Verwendung einer Vorrichtung, zum Montieren von Türzargen, Fensterstöcken oder Einbauschränken in die zugehörigen Türlaibungen, Fensterlaibungen oder Gebäudeaussparungen.

Das bevorzugte Anwendungsgebiet der Erfindung liegt bei der Montage von Türzargen, Fensterstöcken, Einbauschränken u. dgl. in die zugehörigen Türlaibungen, Gebäudeaussparungen etc.. Beim Einbau der vorgenannten Bauteile hat man sich bisher üblicherweise einfacher Holzkeile bedient, welche nach Einbringen des Türstockes o. dgl. in die zugehörige Gebäudeöffnung beispielsweise an den Ecken zwischen Türlaibung und Gebäudeöffnung eingetrieben wurden, um die einzelnen Bauteile richtig in die erforderliche Senkrechtlage und Waagerechtlage zu bringen. Dabei hat es sich immer wieder als nachteilig erwiesen, daß solche Holzkeile an der Eintrittsstelle zwischen Bauteil und Gebäudeöffnung eine hohe punktuelle Flächenpressung ausübten, und daß sich ja gerade an dieser Stelle häufig zum Abplatzen neigender Putzbelag befindet. Das führte dann zu unerwünschten Putzausbrüchen. Diese erforderten nicht nur kostenaufwendiges Nacharbeiten, sondern ein solcher Putzausbruch an der eigentlichen tragenden Stelle zwischen Keil und Gebäudeöffnung führte dann auch zu einer unzureichenden oder nachlassenden Sicherungswirkung, welche die richtige Ausrichtung der Türzarge o. dgl. infrage stellte.

Aus der DE-AS 23 52 048 sind nun auch aus mehreren Teilen zusammengesetzte Keile bekanntgeworden, bei denen zwei gegeneinander bewegliche Keilteile durch Längsbewegung eines zwischen ihnen befindlichen Keilbetätigungsstückes parallel voneinander entfernt oder angenähert werden konnten. Trotz der mechanischen Betätigungsmöglichkeit würde die Anwendung derartiger Keile für die Montage von Türzargen u. dgl. zu den gleichen Nachteilen wie bei der Anwendung einfacher Holzkeile führen. Auch sind diese mechanisch betätigbaren Keile von vergleichsweise kompliziertem Aufbau mit mehreren Stufenflächen, Gelenkzapfen, Federaufnahmebohrungen, Feder, Betätigungszapfen etc..

Der vorliegenden Erfindung liegt die Aufgabe zugrunde, eine Montagehilfe für Bauteile wie Türzargen o. dgl. in Türlaibungen o. dgl. zu schaffen, die bei einfacher Handhabungs- und Betätigungsmöglichkeit und einfachem Aufbau für sicheren Halt der zu montierenden Bauteile sorgt und insbesondere auch unerwünschte Beschädigungsgefahr an den Kantenbereichen der die Bauteile aufnehmenden Gebäudeöffnung o. dgl. vermeidet.

Zur Lösung der vorgenannten Aufgabe wird eine Verwendung entsprechend Anspruch 1 und eine Vorrichtung entsprechend Anspruch 2 vorgeschlagen.

Eine erfindungsgemäße Anordnung führt dazu, daß die beispielsweise in dem Spalt zwischen einer Türzarge und einer Türlaibung auszuübende Keilwirkung nun durch Aufspreizen der vorderen Enden der Vorrichtungsteile voneinander weg erfolgt, so daß sich die größte Pressung aufgrund der erfindungsgemäßen Wirkung der Vorrichtung nicht mehr im Kantenbereich der Gebäudeöffnung, in welchem Putzabplatzgefahr besteht, ergibt, sondern vielmehr in einem inneren Flächenbereich der Gebäudeöffnung, der weniger beschädigungsgefährdet und obendrein unsichtbar ist.

Die beiden Vorrichtungsteile können entweder über ihre gesamte Länge hinweg als Parallelflachkörper ausgestaltet sein oder so geformt sein, daß sie wenigstens teilweise eine aüßere Keilform bilden. Diese äußere Keilform läuft vorzugsweise nicht bis zu einer scharfkantigen Spitze aus, sondern endet vorher stumpf.

Gemäß vorteilhafter Ausgestaltung sind die Vorrichtungsteile in ihrem rückwärtigen Bereich als Parallelflachkörper ausgestaltet, die im Bereich der konvergierenden Keilflächen an den Innenseiten dann in sich verjüngend gestaltete Vorderenden der Vorrichtungsteile übergehen.

An ihren rückwärtigen Enden können die Vorrichtungsteile gelenkig miteinander verbunden sein.

Vorzugsweise bestehen die Vorrichtungsteile aus einem nachgiebigen Preßmaterial wie Polypropylen (PP), Polyethylen (PE) o. dgl.. Derartige Werkstoffe haben den Vorteil, daß sie elastisch verformbar sind, so daß die in Abhängigkeit des Jahreszeitenwechsels auftretenden Wärmedehnungen von z.B. Fensterstöcken bei zum ständigen Verbleib im Spalt montierten Vorrichtungen aufgenommen werden können, ohne daß den Fensterstock verformende mechanische Spannungen auftreten. Bilden sich die Wärmedehnungen wieder zurück, so nehmen die erfindungsgemäßen Vorrichtungsteile wieder ihre ursprüngliche Form an.

Die o.g. Werkstoffe führen auch dazu, daß die Vorrichtungsteile im aufgespreizten Zustand nicht nur an ihren Vorderenden tragen, sondern daß sie sich vielmehr im Bereich des Betätigungsstückes mit ihren äußeren Flächen wulstartig an das Bauteil und die Gebäudeöffnung o. dgl. anlegen und für einwandfreie und beschädigungsfreie Sicherung der Türzarge o. dgl. sorgen.

Das Betätigungsstück kann ein Stück Rundmaterial sein, durch welches eine als Zugvorrichtung dienende Betätigungsschraube hindurchgeschraubt ist. Eine Schraube als Zugvorrichtung hat den Vorteil, daß ein doppeltwirkender Effekt gegeben ist, also das Betätigungsstück sowohl aktiv in die Keilflächen der Vorrichtungsteile hineingezogen als auch aktiv von diesen gelöst werden kann. Das Betätigungsstück kann auch andere geeignete Formen aufweisen, wie z.B. eine solche, die mit an die Keilflächen der Vorrichtungsteile angepaßten eigenen Keilflächen versehen ist.

Bei Ausführung des Betätigungsstückes aus einem Preßmaterial wie PP oder PE erweist sich die Anordnung einer selbstschneidenden Betätigungsschraube als günstig.

Die beiden Vorrichtungsteile weisen in ihrem rückwärtigen Teil eine längs verlaufende Schraubenaufnahmenut auf, die am rückwärtigen Ende in eine Schraubenkopf-Aufnahmeausnehmung mit Abstützflächen für das innere Ende des Schraubenkopfes mündet, wobei der Schraubenkopf mit seiner Werkzeugangriffsfläche durch ein Fenster am rückwärtigen Vorrichtungsende freiliegt.

Als Alternative zu der Betätigungsschraube kann als Zugvorrichtung auch ein mit dem Betätigungsstück zug- und/oder druckfest verbundener Betätigungsstab vorgesehen werden, wobei in diesem Fall die o.g. Schraubenaufnahmenut als Stabaufnahmenut fungiert. Ein solcher Stab kann zusammen mit dem Betätigungsstück einteilig gegossen werden. Das Auseinanderspreizen der Vorrichtungsteile erfolgt bei dieser Ausführungsform z.B. mit Hilfe eines zangenartigen Werzeugs, welches das am rückwärtigen Vorrichtungsende hervorstehende rückwärtige Ende des Betätigungsstabs ergreifen kann. Das Festlegen des angezogenen Betätigungsstabs kann dann durch Verknoten des rückwärtigen Stabendes oder mittels einer geeigneten Muffe bewerkstelligt werden, so daß eine Aufnahmeausnehmung mit Abstützflächen entfallen kann.

Gemäß vorteilhafter Ausgestaltung sind die beiden Vorrichtungsteile als einheitliches gestrecktes Preßteil mit die Vorrichtungsteile am rückwärtigen Ende verbindenden Materialstegen als Gelenke ausgestaltet.

Eine Vorrichtung der vorstehend erläuterten Art läßt sich als preisgünstiges Massenteil herstellen und mit seinen drei Bestandteilen (gestrecktes und ggfs. zusammenzuklappendes Preßteil, Betätigungsstück und Zugvorrichtung) aufs einfachste montieren.

Während mit ein und derselben Vorrichtungsgröße Montagespalte verschiedener Abmessungen überbrückt werden können, können solche Vorrichtungen auch auf einfache Weise in verschiedenen Größen hergestellt und zur Verwendung an unterschiedlichen Anwendungsstellen satzweise zur Verfügung gestellt werden.

Mittels einer solchen Vorrichtung kann die erforderliche Ausrichtung und Fixierung von Bauteilen wie Türzargen in Türlaibungen oder vergleichbaren Bauteilen auf sehr einfache Weise erfolgen. Es wird lediglich die noch in ihrer Ausgangsstellung mit den beiden Vorrichtungsteilen aneinanderliegend befindliche Vorrichtung in den Spalt zwischen Türzarge und Türlaibung lose eingeführt und alsdann vom rückwärtigen Ende her die Zugvorrichtung im Falle der Ausbildung als Betätigungsschraube mittels eines Schraubenziehers oder auch maschinellen Schraubendrehers und im Falle der Ausbildung als Betätigungsstab mittels einer Zange betätigt. Daraufhin ergibt sich selbsttätig die Aufspreizung der Vorrichtungsteile von ihrem vorderen Ende her und ggfs. das wulstartige Anliegen in einem mittleren Bereich des Spaltes zwischen den Bauteilen. Nach Bedarf können eine oder mehrere solcher Vorrichtungen zunächst einmal mehr oder minder locker angeordnet und nach der präzisen Ausrichtung der Türzarge o. dgl. in waagerechter und senkrechter Richtung dann fester angezogen werden. Nach der bleibenden Fixierung des Bauteiles in der Gebäudeöffnung durch Verputzen, Verdübeln o.dgl. können dann die Vorrichtungen durch Betätigung der Zugvorrichtungen im Gegensinne aufs einfachste entfernt und erneuter Verwendung zugeführt werden.

Es folgt die Beschreibung eines Ausführungsbeispieles der Erfindung anhand von Zeichnungen.
- Fig. 1: zeigt in schematischer Seitenansicht die als Montagehilfe dienende Vorrichtung gemäß der vorliegenden Erfindung in unbetätigtem Zustand.
- Fig. 2: zeigt ein herausgenommenes Betätigungsstück mit einer hindurchgeschraubten Betätigungsschraube.
- Fig. 3: zeigt einen Preßrohling in noch auseinandergeklapptem Zustand der beiden Vorrichtungsteile.
- Fig. 4: zeigt die Innenansicht eines Vorrichtungsteiles.
- Fig. 5: zeigt eine Außenansicht der Vorrichtung mit daran ersichtlichen Preßausnehmumngen zur Materialersparnis.

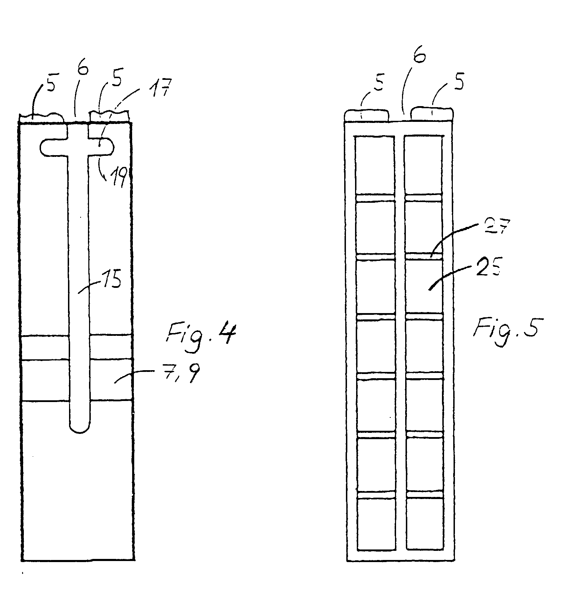

Die in den Figuren schematisch veranschaulichte erfindungsgemäße Vorrichtung in Form eines Keils dient als Montagehilfe für Bauteile wie Türzargen o. dgl. in Türlaibungen o. dgl.. Der Keil besteht aus zwei gegeneinander beweglichen Vorrichtungsteilen in Form von Keilteilen 1 und 3, die sich gemäß Fig. 3 als einheitliches Preßteil aus einem nachgiebigen Material wie PP oder PE herstellen lassen. Die beiden Keilteile 1 und 3 sind mit aus dem gleichen Material einstückig mit den Keilteilen gepreßten Materialstegen 5 versehen, welche als Gelenke zwischen den beiden Keilteilen 1 und 3 dienen. Die als Gelenke dienenden Materialstege 5 lassen zwischen sich einen Bereich als Fenster 6 frei, durch welches in sich aus dem Nachstehenden ergebender Weise ein Schraubenzieher oder dgl. als Betätigungswerkzeug eingeführt werden kann. An ihren aneinander zugekehrten Flächen sind die Keilteile 1 und 3 mit ausgenommenen Keilflächen 7 und 9 versehen, in welchen ein verschiebbares Betätigungsstück 11 liegt. Das Betätigungsstück 11 ist beispielsweise ein rundes PP- oder PE-Stück, in welches eine Betätigungsschraube 13 selbstschneidend einschraubbar ist.

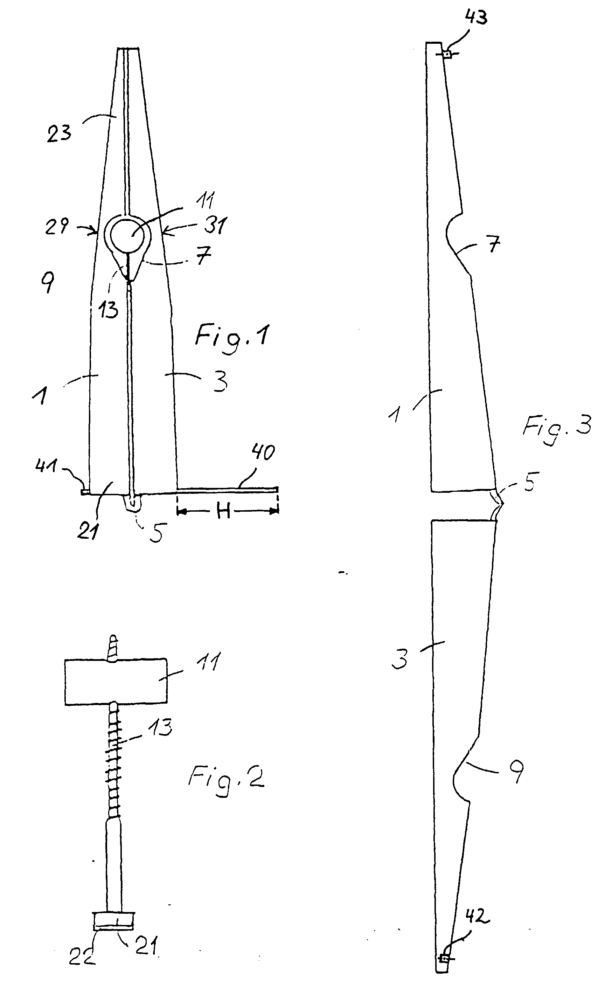

Die Keilflächen 7 und 9 konvergieren zum rückwärtigen Ende des Keiles, so daß die beiden Keilteile an ihrem vorderen Ende aufgespreizt werden, wenn das runde Betätigungsstück 11 mittels Betätigungsschraube in die konvergierenden Keilflächen hineingezogen wird. In Fig. 1 ist die Betätigungsschraube 13 nur schematisch angedeutet.

Die beiden Keilteile 1 und 3 sind im wesentlichen gleich gestaltet und weisen auf ihrer Innenseite jeweils eine längs verlaufende Schraubenaufnahmenut 15 auf, die sich vom rückwärtigen Ende der Keilteile 1 und 3 ein Stück über die konvergierenden Keilflächen nach vorne erstreckt. Am rückwärtigen Ende ist die Schraubenaufnahmenut mit einer quer verlaufenden Schraubenkopf-Aufnahmeausnehmung 17 versehen, deren vorderes Ende 19 als Abstützfläche für den Schraubenkopf 21 dient, so daß die Schraube 13 bei Drehung das Betätigungsstück 11 in Richtung des Schraubenkopfes 21 heranziehen und damit die Keilteile 1 und 3 durch die Berührung des Betätigungsstückes 11 mit den konvergierenden Keilflächen 7 und 9 auseinanderspreizen kann.

Das Betätigungsstück 11 ist bei der gezeigten Ausführungsform etwa im mittleren Bereich der Keilteile 1 und 3 angeordnet. Das Betätigungsstück 11 kann jedoch auch im vorderen Bereich der Keilteile 1 und 3 vorgesehen werden. Dadurch weist der erfindungsgemäße Keil bei konstanter Länge der Schraube 13 eine geringere Gesamtlänge auf.

Bei 22 ist ein Schraubenkopfschlitz als Angriffsfläche für einen Schraubenzieher als Betätigungswerkzeug angedeutet.

Gemäß Fig. 1 sind die einzelnen Keilteile 1 und 3 an ihren rückwärtigen Enden bei 21 als Parallelflachkörper ausgeführt, während sie an den vorderen Enden 23 verjüngt sind. Die Keilteile 1 und 3 können aber in der in Fig. 3 gezeigten Weise auch über ihre ganze Länge verjüngt zulaufen.

Gemäß Fig. 5 sind die Keilteile auf ihrer Außenseite mit Preßausnehmungen 25 und dazwischen stehengebliebenen Materialstegen 27 versehen. Auf diese Weise läßt sich Materialersparnis erzielen.

Die Klemmweite des erfindungsgemäßen Keils kann bei Bedarf mittels auf die Außenseiten der Keilteile 1 und 3 aufsteckbarer Platten erweitert werden, die mit in die Preßausnehmungen 25 passenden Steckelementen versehen sind.

Da das für die Keilteile verwendete Material wie PP oder PE nachgiebig ist, können sich die Keilteile auf ihrer Außenseite im Bereich der Keilflächen 7 an den mit 29 und 31 angedeuteten Stellen biegen, und das kann zu einem wulstartigen Anlegen dieser Stellen an den Gegenflächen der gegeneinander zu verkeilenden Teile wie Türzarge und Türlaibung des Gebäudes führen.

Der Keil nach der vorliegenden Erfindung läßt sich in unaufgespreiztem Zustand einfach in den Spalt zwischen den gegeneinander auszurichtenden Teilen wie Türzarge und Türlaibung einschieben und dann durch Drehen der Betätigungsschraube nach Wunsch mehr oder minder fest verkeilen. Alsdann können die betreffenden Teile durch die zum Verbleiben vorgesehenen Befestigungsmittel wie Putz, Verschraubung, Verdübelung o. dgl. fest aneinander angebracht werden und die zur Vorfixierung verwendeten Keile können einfach wieder herausgenommen und wieder verwendet werden.

Alternativ kann der erfindungsgemäße Keil auch in dem Spalt zwischen den gegeneinander auszurichtenden Teilen verbleiben.

Der Keil kann auch, wie in Fig. 1 gezeigt, mit einem nachgiebig verformbaren Halteflügel 40 versehen werden, der über die gesamte Tiefe des Keils an dem Keilteil 3 angeordnet ist. Der Halteflügel 40 bildet einen im wesentlichen rechten Winkel mit den Ebenen der Innenflächen der Keilteile 1 bzw. 3 und kann natürlich auch an dem anderen Keilteil 1 angeordnet sein.

Wird der Keil in einen vertikal verlaufenden Spalt eingeführt, der einerseits breiter ist als die Breite der beiden zusammengelegten Keilteile 1 und 3 und andererseits weniger breit ist als die Breite der zusammengelegten Keilteile 1 und 3 zuzüglich der in Fig. 1 erkennbaren Höhe H des Halteflügels 40, so biegt sich der Haltebügel 40 im Sinne der Darstellung in Figur 1 elastisch bzw. nachgiebig nach unten, so daß der Keil zwischen den vertikalen Spaltwandungen gehalten und somit daran gehindert wird, herunterzufallen. Bei den dabei wirkenden Haltekräften handelt es sich um Reibungskräfte, die aufgrund der Klemmwirkung des umgebogenen Halteflügels 40 entstehen. Der Keil wird vorzugsweise derart in den Spalt eingeführt, daß sich der Halteflügel 40 an der jeweiligen äußeren Spaltwandung abstützt, also z.B. an der Türlaibung eines Gebäudes und nicht an der zu montierenden Türzarge.

In Figur 1 ist ein an dem Keilteil 1 vorgesehender Anschlag 41 zu erkennen, der sich vorzugsweise über die gesamte Tiefe des Keilteils 1 erstreckt. Das Keilteil 1 ist beim Einführen in den Spalt der inneren Spaltwandung, also z.B. der Türzarge oder dem Fensterstock, zugewandt. Somit verhindert der Anschlag 41, daß der erfindungsgemäße Keil zu weit in den Spalt zwischen den gegeneinander auszurichtenden Teilen eingeführt wird. Bevor das äußerste rückwärtige Ende des Keils in den Spalt gelangen kann, schlägt der Anschlag 41 z.B. an dem zu montierenden Fensterstock an und verhindert dadurch ein weiterschieben des Keils. Wird ein erfindungsgemäßer Anschlag 41 am Keil vorgesehen, kann der Halteflügel 40 seine Funktion natürlich nur dann ausüben, wenn er sich bereits vor dem Eindringen in den Spalt an einer entsprechenden Wandung abstützen kann.

Wie in Figur 1 zu erkennen ist, ist sowohl der Halteflügel 40 als auch der Anschlag 41 am äußersten rückwärtigen Ende des Keils angeordnet. Funktionsgemäß weist der Anschlag 41 eine sehr viel geringere Höhe als der Halteflügel 40 auf.

Um die Keilteile 1 und 3 im unbenutzten Zustand zusammenzuhalten, kann neben der am rückwärtigen Ende vorgesehenen gelenkigen Verbindung eine Steckverbindung am vorderen Ende der Keilteile 1 und 3 vorgesehen werden. Dabei weist eines der Keilteile wenigstens einen an ihm angeformten Stift 43 auf, der in eine entsprechende Öffnung in dem anderen Keilteil eingreifen kann. In Figur 3 ist ein entsprechender Stift 43 an dem Keilteil 1 und eine zugehörige Öffnung 42 in dem Keilteil 3 gezeigt. Die Öffnung 42 kann sowohl aus einem Sackloch als auch aus einem Durchgangsloch bestehen. Das Durchmesserverhältnis von Stift 43 und Öffnung 42 ist vorzugsweise so festgelegt, daß der Stift 43 aufgrund eines leicht lösbaren Reibschlusses in der Öffnung 42 gehalten wird.

Die vorderen Enden der Keilteile 1 und 3 können auch fest miteinander verbunden sein, so daß sie sich beim Auseinanderspreizen der Keilteile nicht voneinander wegbewegen. Diese Verbindung der vorderen Enden kann entweder unlösbar durch Angießen der beiden Keilteile aneinander oder lösbar z.B. mit Hilfe einer an einem der Keilteile 1 oder 3 angegossenen Lasche und einem entsprechenden an dem anderen Keilteil vorgesehenen Aufnahmeelement zum Aufnehmen und Festhalten der Lasche ausgestaltet sein.

## Patentansprüche

1. Verwendung einer Vorrichtung mit zwei Vorrichtungsteilen (1,3), die an ihren einander zugekehrten Flächen keilflächenartig ausgestaltet und mittels eines verschiebbaren Betätigungsstücks (11) auseinanderspreizbar sind, wobei die Vorrichtungsteile (1,3) auf ihren Innenseiten zum rückwärtigen Ende der Vorrichtung hin konvergierende Keilflächen (7,9) aufweisen, zwischen denen das Betätigungsstück (11) lose eingelegt ist und mittels einer am rückwärtigen Ende der Vorrichtung abgestützten Zugvorrichtung (13) in die konvergierenden Keilflächen (7,9) hineinziehbar ist, zum Montieren von Türzargen, Fensterstöcken oder Einbauschränken in die zugehörigen Türlaibungen, Fensterlaibungen oder Gebäudeaussparungen.

2. Montagehilfsvorrichtung für Bauteile wie Türzargen o. dgl. in Türlaibungen o. dgl. mit zwei Vorrichtungsteilen (1,3), die an ihren einander zugekehrten Flächen keilflächenartig ausgestaltet und mittels eines verschiebbaren Betätigungsstückes (11) auseinanderpreizbar sind, wobei die Vorrichtungsteile (1,3) auf ihren Innenseiten zum rückwärtigen Ende der Vorrichtung hin konvergierende Keilflächen (7,9) aufweisen, zwischen denen das Betätigungsstück (11) lose eingelegt ist und mittels einer am rückwärtigen Ende der Vorrichtung abgestützten Zugvorrichtung (13) in die konvergierenden Keilflächen (7,9) hineinziehbar ist,
**dadurch gekennzeichnet, daß**
an einem der Vorrichtungsteile (1,3) ein Halteflügel (40) vorgesehen ist, der beim Einführen der Vorrichtung in einen Spalt nachgiebig umbiegbar ist, so daß er eine die Vorrichtung reibschlüssig haltende Klemmwirkung entfaltet.

3. Montagehilfsvorrichtung nach Anspruch 2,
**dadurch gekennzeichnet,** daß
die Vorrichtungsteile (1,3) in ihrem rückwärtigen Bereich (21) als Parallelflachkörper ausgestaltet sind und an ihren vorderen Enden (23) eine aüßere Keilform aufweisen.

4. Montagehilfsvorrichtung nach Anspruch 2 oder 3,
**dadurch gekennzeichnet,** daß
die Vorrichtungsteile an ihren rückwärtigen Enden gelenkig (5) verbunden sind.

5. Montagehilfsvorrichtung nach Anspruch 2, 3 oder 4,
**dadurch gekennzeichnet,** daß
die Vorrichtungsteile (1,3) aus einem nachgiebigen Preßmaterial wie Polypropylen oder Polyethylen bestehen.

6. Montagehilfsvorrichtung nach einem oder mehreren der voranstehenden Ansprüche 2-5,
**dadurch gekennzeichnet, daß**
das Betätigungsstück (11) ein Stück Rundmaterial ist, durch welches eine als Zugvorrichtung dienende Betätigungsschraube (13) hindurchgeschraubt ist.

7. Montagehilfsvorrichtung nach einem oder mehreren der voranstehenden Ansprüche 2-6,
**gekennzeichnet durch**
die Anordnung einer selbstschneidenden Betätigungsschraube (13).

8. Montagehilfsvorrichtung nach einem oder mehreren der voranstehenden Ansprüche 2-7,
**dadurch gekennzeichnet , daß**
die beiden Vorrichtungsteile (1,3) in ihrem rückwärtigen Teil eine längs verlaufende Schraubenaufnahmenut (15) aufweisen, die am rückwärtigen Ende in eine Schraubenkopf-Aufnahmeausnehmung (17) mit Abstützflächen (19) für das innere Ende des Schraubenkopfes mündet, wobei der Schraubenkopf mit seiner Werkzeugangriffsfläche (22) durch ein Fenster (6) am rückwärtigen Vorrichtungsende freiliegt.

9. Montagehilfsvorrichtung nach einem oder mehreren der voranstehenden Ansprüche 2-8,
**dadurch gekennzeichnet, daß**
die beiden Vorrichtungsteile als einheitliches gestrecktes Preßteil (Fig. 3) mit die Vorrichtungsteile verbindenden Materialstegen (5) als Gelenke ausgestaltet sind.

10. Montagehilfsvorrichtung nach einem der voranstehenden Ansprüche 2-9,
**dadurch gekennzeichnet, daß**
an einem der Vorrichtungsteile (3,1) ein Anschlag (41) vorgesehen ist, der verhindert, daß die Vorrichtung zu weit in einen Spalt eingeführt wird.

## Claims

1. Use of a device having two parts (1, 3), which have wedge-shaped mutually facing surfaces and may be spread apart by means of a displaceable actuating member (11), wherein the device parts (1, 3) comprise, on their insides, wedge-shaped surfaces (7, 9) converging towards the rear end of the device, the actuating member (11) being loosely inserted between said wedge-shaped surfaces (7, 9) and being capable of being pulled into the converging wedge-shaped surfaces (7, 9) by means of a pulling device (13) supported on the rear end of the device, for the fitting of door frames, window frames or built-in cupboards into the associated door or window reveals or building recesses.

2. An auxiliary fitting device for fitting components such as door frames or the like in door reveals or the like, having two device parts (1, 3), which have wedge-shaped mutually facing surfaces and may be spread apart by means of a displaceable actuating member (11), wherein the device parts (1, 3) comprise, on their insides, wedge-shaped surfaces (7, 9) converging towards the rear end of the device, the actuating member (11) being loosely inserted between said wedge-shaped surfaces (7, 9) and being capable of being pulled into the converging wedge-shaped surfaces (7, 9) by means of a pulling device (13) supported on the rear end of the device,
characterised in that
a retaining wing (40) is provided on one of the device parts (1, 3), which wing (40) may be resiliently bent on insertion of the device into a gap, such that a clamping effect develops which holds the device in place by friction.

3. An auxiliary fitting device according to claim 2, characterised in that in their rear area (21) the device parts (1, 3) take the form of parallel flat members and their front ends (23) exhibit an external wedge shape.

4. An auxiliary fitting device according to claim 2 or claim 3, characterised in that the device parts are connected articulatedly (5) at their rear ends.

5. An auxiliary fitting device according to claim 2, claim 3 or claim 4, characterised in that the device parts (1, 3) consist of a resilient moulding material such as polypropylene or polyethylene.

6. An auxiliary fitting device according to one or more of preceding claims 2 to 5, characterised in that the actuating member (11) consists of a piece of round material through which an actuating screw (13) is screwed which serves as the pulling device.

7. An auxiliary fitting device according to one or more of preceding claims 2 - 6, characterised by the provision of a self-cutting actuating screw (13).

8. An auxiliary fitting device according to one or more of preceding claims 2 - 7, characterised in that at their rear part the two device parts (1, 3) comprise a longitudinally extending screw receiving groove (15), which opens at the rear end into a screw head receiving recess (17) with supporting faces (19) for the inner end of the screw head, wherein the tool engagement face (22) of the screw head is freely accessible through a window (6) at the rear end of the device.

9. An auxiliary fitting device according to one or more of preceding claims 2 - 8, characterised in that the two device parts constitute a single elongate moulding (Fig. 3), with material webs (5) connecting the device parts and acting as hinges.

10. An auxiliary fitting device according to any one of preceding claims 2 - 9, characterised in that a limit stop (41) is provided on one of the device parts (3, 1) which prevents the device from being inserted too far into a gap.

## Revendications

1. Utilisation d'un dispositif avec deux parties de dispositif (1, 3), qui sont conçues comme des surfaces de clavette sur leurs surfaces tournées l'une vers l'autre et peuvent être écartées l'une de l'autre au moyen d'une pièce de commande (11) coulissante, les parties du dispositif (1,3) présentant sur leurs faces intérieures, en direction de l'extrémité arrière du dispositif, des surfaces de clavette (7,9) convergentes, entre lesquelles la pièce de commande (11) est insérée de façon amovible et peut être rentrée dans les surfaces de clavette (7,9) convergentes au moyen d'un dispositif de traction (13) appuyé sur l'extrémité arrière du dispositif, pour le montage de châssis de portes, de dormants de fenêtre ou de placards dans les intrados de porte, chambranles ou évidements de bâtiment correspondants.

2. Dispositif d'aide au montage pour des composants tels que les châssis de porte ou similaires dans des intrados de porte ou similaires avec deux parties de dispositif (1,3), qui sont conçues comme des surfaces de clavette sur leurs surfaces tournées l'une vers l'autre et peuvent être écartées l'une de l'autre au moyen d'une pièce de commande (11) coulissante, les parties du dispositif (1,3) présentant sur leurs faces intérieures, en direction de l'extrémité arrière du dispositif, des surfaces de clavette (7,9) convergentes, entre lesquelles la pièce de commande (11) est insérée de façon amovible et peut être rentrée dans les surfaces de clavette (7,9) convergentes au moyen d'un dispositif de traction (13) appuyé sur l'extrémité arrière du dispositif, caractérisé en ce que, sur l'une des parties du dispositif (1,3), il est prévu un volet de retenue (40), qui peut être replié de façon souple lors de l'introduction du dispositif dans une fente, de sorte qu'il déploie un effet de serrage qui maintient le dispositif par friction.

3. Dispositif d'aide au montage selon la revendication 2, caractérisé en ce que les parties du dispositif (1,3) sont conçues comme des corps plats parallèles dans leur zone (21) arrière et présentent une forme de clavette extérieure sur leurs extrémités (23) avant.

4. Dispositif d'aide au montage selon la revendication 2 ou 3, caractérisé en ce que les parties du dispositif sont reliées de façon articulée sur leurs extrémités arrière.

5. Dispositif d'aide au montage selon la revendication 2, 3 ou 4, caractérisé en ce que les parties du dispositif (1,3) sont à base d'un matériau pressé tel que du polypropylène ou du polyéthylène.

6. Dispositif d'aide au montage selon l'une ou plusieurs des revendications précédentes 2 à 5, caractérisé en ce que la pièce de commande (11) est une pièce de ronds à travers laquelle est vissée une vis de commande qui sert de dispositif de traction.

7. Dispositif d'aide au montage selon l'une quelconque ou plusieurs des revendications précédentes 2 à 6, caractérisé par la disposition d'une vis de commande (13) autotaraudeuse.

8. Dispositif d'aide au montage selon l'une quelconque ou plusieurs des revendications 2 à 7, caractérisé en ce que les deux parties du dispositif (1,3) présentent dans leur partie arrière une rainure de logement de vis (15) qui s'étend dans le sens longitudinal et qui débouche sur l'extrémité arrière dans un évidement de logement pour tête de vis (17) avec des surfaces d'appui (19) pour l'extrémité intérieure de la tête de vis, la tête de vis avec sa surface d'attaque d'outil (22) passant à travers une fenêtre (6) et reposant librement sur l'extrémité arrière du dispositif.

9. Dispositif d'aide au montage selon l'une quelconque ou plusieurs des revendications précédentes 2 à 8, caractérisé en ce que les deux parties du dispositif sont conçues comme une partie pressée étirée et standard (figure 3) avec des barrettes de matériau (5) reliant les parties du dispositif comme articulations.

10. Dispositif au montage selon l'une quelconque des revendications précédentes 2 à 9, caractérisé en ce que, sur l'une des parties du dispositif (3,1), il est prévu une butée (41) qui empêche que le dispositif soit introduit trop loin dans une fente.
